# EUROPÄISCHE PATENTSCHRIFT

(11) **EP 3 994 289 B1**
(45) Veröffentlichungstag und Bekanntmachung des Hinweises auf die Patenterteilung: **09.10.2024**
(21) Anmeldenummer: 20757212.4
(22) Anmeldetag: 01.07.2020
(51) Int. Cl.: C22C 19/05, C22C 1/04, B22F 9/08, B33Y 70/00, B22F 1/00, B22F 1/065

(54) **NICKEL-BASISLEGIERUNG FÜR PULVER UND VERFAHREN ZUR HERSTELLUNG EINES PULVERS**
NICKEL BASED ALLOY FOR POWDER AND METHOD TO PRODUCE SUCH POWDER
ALLIAGE À BASE DE NICKEL POUR POUDRE ET MÉTHODE POUR PRODUIRE CETTE POUDRE

(30) Priorität: 05.07.2019 DE 102019118221; 26.06.2020 DE 102020116865
(43) Veröffentlichungstag der Anmeldung: 11.05.2022
(73) Patentinhaber: VDM Metals International GmbH, 58791 Werdohl (DE)
(72) Erfinder: WOLF, Martin, 44267 Dortmund (DE)
(86) Internationale Anmeldenummer: PCT/DE2020/100576
(87) Internationale Veröffentlichungsnummer: WO 2021/004580

(56) Entgegenhaltungen:
- EP-A1- 3 120 953
- EP-A1- 3 524 705
- WO-A1-2009/054756
- DE-A1- 102010 011 609
- DE-A1- 102013 018 006
- GB-A- 1 324 621
- QUANYAN WU ET AL: "Microstructure of Long-Term Aged IN617 Ni-Base Superalloy", METALLURGICAL AND MATERIALS TRANSACTIONS A, SPRINGER-VERLAG, NEW YORK, vol. 39, no. 11, 15 August 2008 (2008-08-15), pages 2569 - 2585, XP019696390, ISSN: 1543-1940

## Beschreibung

Die Erfindung betrifft eine Nickelbasislegierung für Pulver.

Der WO 2015/110668 A2 ist ein Verfahren zur Herstellung von Pulvern auf Eisenbasis zu entnehmen, welche unter Zuhilfenahme einer Zentrifuge atomisiert werden, mit folgenden Verfahrensschritten:
- zu Verfügung stellen einer Legierung mit einem Schmelzpunkt oberhalb von 1040°C,
- Erschmelzen der Zusammensetzung,
- Atomisieren der geschmolzenen Zusammensetzung unter Zuhilfenahme einer Zentrifuge oder einer rotierenden Atomisiereinrichtung.

Die DE 10 2015 016 729 A offenbart ein Verfahren zur Herstellung von metallischen Halbzeugen aus einer Legierung mit mehr als 50 % Nickel, beinhaltend folgende Verfahrensschritte:
- eine Elektrode wird durch VIM erzeugt,
- die Elektrode wird in einem Ofen zur Reduzierung von Spannungen und Überalterung einer Wärmebehandlung im Temperaturbereich zwischen 400 und 1250°C für einen Zeitraum von 10 bis 336 Stunden unterzogen,
- die Elektrode wird an Luft oder im Ofen abmessungsabhängig, insbesondere durchmesserabhängig, auf eine Temperatur zwischen Raumtemperatur und kleiner 1.250°C, insbesondere kleiner 900°C, abgekühlt,
- die abgekühlte Elektrode wird anschließend durch VAR mit einer Umschmelzrate von 3,0 bis 10 kg/Minute zu einem VAR-Block umgeschmolzen,
- der VAR-Block wird in einem Ofen im Temperaturbereich zwischen 400_und 1250°C für einen Zeitraum von 10 bis 336 Stunden wärmebehandelt,
- der VAR-Block wird an Luft oder im Ofen abmessungsabhängig, insbesondere durchmesserabhängig, auf eine Temperatur zwischen Raumtemperatur und kleiner 1.250°C, insbesondere kleiner 900°C, abgekühlt,
- der VAR-Block wird erneut mit einer Umschmelzrate von 3,0 bis 10 kg/Minute umgeschmolzen,
- der umgeschmolzene VAR-Block wird einer Wärmebehandlung im Temperaturbereich zwischen 400 und 1250°C für einen Zeitraum von 10 bis 336 Stunden unterzogen,
- der VAR-Block wird anschließend durch Warm- und/oder Kaltformgebung an die gewünschte Produktform und Abmessung gebracht.

Durch die US 3,802,938 ist ein Verfahren zur Herstellung einer NickelbasisLegierung bekannt geworden, die folgende Zusammensetzung haben kann: Cr 5,0 - 25 %, Co 5,0 - 25 %, Mo bis 12 %, W bis 15 %, Nb bis 4 %, Ti 0,5 - 6 &, Al 1 - 7 %, B bis 0,4 %, Zr bis 0,3 %, Ta bis 12 %, Hf bis 5 %, Re bis 1 %. Die Legierung kann aus Pulver bestehen, das durch Druck verformt und einer Wärmebehandlung unterzogen wird, wobei ein Pulverbestandteil aus einer weitgehend kohlenstofffreien Nickelbasis Superlegierung und ein anderer Bestandteil aus einem pulverförmigen Karbid besteht.

Es ist allgemein bekannt, dass Ni- und Ni-Co-Legierungen eingesetzt werden um Bauteile mit besonderen Eigenschaften bezüglich Korrosionsbeständigkeit und guten mechanischen Eigenschaften, wie Festigkeit, Warmfestigkeit und Bruchzähigkeit, zu fertigen.

Die DE 10 2013 018 006 A1 offenbart eine Nickel-Chrom-Molybdän-Legierung, die (in Gew.-%)

| | |
|---|---|
| 20 - 23 % | Chrom |
| 10 - 13 % | Kobalt |
| 8 - 10 % | Molybdän |
| 0,03 - 0,10 % | Kohlenstoff |
| 0,8 - 1,5 % | Aluminium |
| 0,2 - 0,50 % | Titan |

| | |
|---|---|
| 0,005 - 0,10 % | Zirkonium |
| 0,008 - 0,02 % | Bor |
| Rest | Nickel |

und unvermeidbare Verunreinigungen enthält.

Darüber hinaus können noch eines oder mehrere der Elemente Si, Mn, P, S, Nb, Fe gegeben sein. Aus der Legierung kann ein Produkt generiert werden, wobei das Produkt ein Pulver, ein Granulat, eine Platte, ein Stab, ein Draht, ein Rohr, ein gegossenes Produkt, ein geschmiedetes Produkt, ein gerolltes Produkt oder ein geschweißtes Produkt ist.

Der DE 10 2010 011 609 A1 ist ein Nickel-Chrom-Kobalt-Molybdän-Legierung zu entnehmen, bestehend aus (in Gew.-%)

| | |
|---|---|
| Cr | 20 - 24 % |
| Fe | ≤ 1,5 % |
| C | 0,03 - 0,1 % |
| Mn | ≤ 0,5 % |
| Si | ≤ 0,25 % |
| Co | 10 - 15 % |
| Cu | ≤ 0,1 % |
| Mo | 9,0 - 10,5 % |
| Ti | 0,1 - 0,8 % |
| AI | 0,3 - 2,0 % |
| P | < 0,012 % |
| S | < 0,05 % |
| B | > 0,02 - < 0,08 % |
| Nb | 0,2 - 2 % |
| N | ≤ 0,015 % |
| Mg | ≤ 0,006 % |
| Ca | ≤ 0,01 % |
| V | ≤ 0,05 % |

| | |
|---|---|
| Ni | Rest sowie erschmelzungsbedingte Verunreinigungen |

Diese Legierung kann zu Rohren, Blechen, Draht, Stangen, Schmiedeteilen, Bändern, Schweißkonstruktionen für Gasturbinen, im Ofen- und Kraftwerksbau, in der petrochemischen Industrie sowie im Bereich der Kernenergietechnik eingesetzt werden.

Im technischen Aufsatz Quanyan Wu et al. "Microstructure of Long-Term Aged IN617 Ni-Base Superalloy" ist in Tabelle 1 eine chemische Zusammensetzung der Legierung IN617 Alloy angegeben, die folgenden Elemente aufweist:

| | |
|---|---|
| Ni | Rest |
| Cr | 22,0 % |
| Co | 12,5 % |
| Mo | 9,0 % |
| Al | 1,2 % |
| Fe | 1,0 % |
| Mn | 1,0 % |
| Ti | 0,4 % |
| Si | 0,1 % |
| C | 0,1 % |
| Cu | 0,5 % |
| B | 0,006 % |
| S | 0,015 % |

Der Erfindung liegt die Aufgabe zugrunde, ein Pulver für die additive Fertigung von Komponenten bereitzustellen, welches die vorteilhaften Eigenschaften der Ni- und Ni-Co-Legierungen aufweist und kostengünstig herzustellen ist. Wichtig sind dabei die besonderen Anforderungen an Verteilung der Partikelgröße, Partikelform und Rieselfähigkeit des Pulvers zu erfüllen.

Darüber hinaus soll ein Verfahren zur Herstellung eines derartigen Pulvers vorgeschlagen werden.

Diese Aufgabe wird gelöst durch eine Nickelbasislegierung für Pulver, wobei die Gehalte (in Gew.-%) wie folgt definiert sind:

| | |
|---|---|
| C | 0,015 - 0,5 % |
| S | max. 0,15 %, insbesondere max. 0,03% |
| Cr | 20 - 25 % |
| Ni | Rest |
| Mn | max. 1 % |
| Si | max. 1 % |
| Mo | bis 10 % |
| Ti | 0,25 - 0,6 % |
| Nb | bis 5,5 % |
| Cu | bis 5 %, insbesondere bis 0,5% |
| Fe | bis 25 % |
| P | max. 0,03%, insbesondere max. 0,02 % |
| Al | 0,8 - 1,5 % |
| V | max. 0,6 % |
| Zr | max. 0,12 %, insbesondere max. 0,1 % |
| Co | bis 15 % |
| B | 0,006 - 0,125 % |
| O | >0,00001 - 0,1 % |

optional

| | |
|---|---|
| Se | max. 0,0005 % |
| Bi | max. 0,00005 % |
| Pb | max. 0,002 % |

und herstellungsbedingte Verunreinigungen,
wobei das Kohlenstoff zu Bor Verhältnis C/B zwischen 4 und 25 liegt, wobei die Summe C + B zwischen 0,156 und 0,625 %, insbesondere im Bereich 0,16 und 0,6 %, speziell im Bereich 0,1875 und 0,530 % liegt und wobei die Summe Nb + Ta max. 5,2 % ist.

Vorteilhafte Weiterbildungen der erfindungsgemäßen Pulverlegierung sind den zugehörigen Unteransprüchen zu entnehmen.

Die Aufgabe wird auch gelöst durch ein Verfahren zur Herstellung eines Pulvers aus einer Nickel-Basislegierung, indem
- eine Legierung in einem VIM-Ofen erschmolzen wird,
- die flüssige Schmelze für 5 min bis 2 Stunden zur Homogenisierung gehalten wird,
- eine geschlossene Verdüsungsanlage mit einem zugeführten Gas auf einen Taupunkt von -10°C bis -120°C eingestellt wird,
- die Schmelze durch eine Düse in einen Gasstrom mit einer Gasflussrate von 2qm³/min bis 150 qm³/min geblasen wird,
- die erstarrten Pulverpartikel in einem gasdicht verschlossenen Behälter gesammelt werden, wobei
- die Partikel eine Partikelgröße von 5µm bis 250µm haben,
- die Partikel des Pulvers sphärisch sind,
- das Pulver Gaseinschlüsse von 0,0 bis 4% Porenfläche (Poren > 1µm) im Verhältnis zur Gesamtfläche ausgewerteter Objekte aufweist,
- das Pulver eine Schüttdichte von 2 bis zur Dichte der Legierung von ca. 8 g/cm³ hat,
- das Pulver unter der Schutzgasatmosphäre mit Argon luftdicht verpackt wird.

Vorteilhafte Weiterbildungen des erfindungsgemäßen Verfahrens sind den zugehörigen verfahrensgemäßen Unteransprüchen zu entnehmen.

Folgende Ausgangsfertigungsschritte sind denkbar:
- ein Vorlegierungsblock mit definierter chemischer Analyse wird durch Erschmelzen im VIM-Ofen erzeugt,
- ein Vorlegierungs-Block wird durch Sägen in kleine Stücke getrennt.
- die Stücke der Vorlegierung werden in einem VIM-Ofen erschmolzen, oder
- Legierungselemente einer definierten Einwaage werden entsprechend der chemischen Analyse in einem VIM erschmolzen,
- die flüssige Schmelze wird für 5 min bis 2 Stunden zur Homogenisierung gehalten.

An die alternativen Ausgangsfertigungsschritte können sich folgende Weiterverarbeitungsschritte anschließen:
- die geschlossene Verdüsungsanlage wird mit Argongas auf einen Taupunkt von -10°C bis -120°C eingestellt, bevorzugt im Bereich von -30°C bis -100°C,
- die Schmelze wird durch eine Düse in einen Argongasstrom mit einer Gasflussrate von 2qm³/min bis 150 m³/min geblasen,
- die erstarrten Pulverpartikel werden in einem gasdicht verschlossenen Behälter gesammelt,
- die Partikel haben eine Partikelgröße von 5µm bis 250 µm, wobei bevorzugte Bereiche zwischen 5 und 150 µm, bzw. 10 und 150 µm liegen,
- die Partikel des Pulvers sind sphärisch,
- das Pulver weist Gaseinschlüsse von 0,0 bis 4% Porenfläche (Poren > 1 µm) im Verhältnis zur Gesamtfläche ausgewerteter Objekte auf, wobei bevorzugte Bereiche bei 0,0 bis 2% liegen. Die Menge der Gaseinschlüsse des Pulvers ermöglicht eine geringe Restporosität der hergestellten Teile.
- das Pulver hat eine Schüttdichte von 2 bis zur Dichte der Legierung von ca. 8 g/cm³, wobei bevorzugte Bereiche bei Werten von 4 bis 5 g/cm³ liegen,
- das Pulver wird unter einer Schutzgasatmosphäre mit Argon luftdicht verpackt.

Das erfindungsgemäße Pulver wird bevorzugt in einer Vakuuminertgasverdüsungsanlage (VIGA) produziert. In dieser Anlage wird die Legierung in einem Vakuuminduktionsschmelzofen (VIM) erschmolzen, in einen Gießtrichter geleitet, der zu einer Gasdüse führt, in der das erschmolzene Metall unter hohem Druck von 5 bis 100 bar mit Inertgas zu Metallpartikeln verdüst wird. Die Schmelze wird im Schmelztiegel bei 5 bis 400 °C über dem Schmelzpunkt erhitzt. Die Metallflussrate bei der Verdüsung beträgt 0,5 bis 80 kg Imin und die Gasflussrate 2 bis 150 m³ / min. Durch die schnelle Abkühlung erstarren die Metallpartikel in Kugelform (sphärische Teilchen). Das bei der Verdüsung verwendete Inertgas kann bedarfsweise 0,01 bis 100 % Stickstoff enthalten. In einem Zyklon wird dann die Gasphase vom Pulver getrennt und anschließend das Pulver verpackt.

Alternativ kann das erfindungsgemäße Pulver statt über VIGA über das sogenannte EIGA Verfahren hergestellt werden. Dabei wird ein vorgefertigter Legierungsblock in Form einer rotierenden Elektrode von einer Induktionsspule berührungslos abgeschmolzen. Die Schmelze tropft von der Elektrode direkt in den Gasstrom einer Gasdüse.

Der Legierungsblock für EIGA kann wiederum durch die Schmelzverfahren VIM, ESU, VAR, VOD bzw. VLF und deren Kombinationen hergestellt werden und optional Warmformprozesse wie Schmieden und Walzen durchlaufen. Von Vorteil ist eine Säuberung der Oberfläche des Blockes durch eine Behandlung wie Schleifen oder / und Schälen vor dem Einsatz im EIGA Verfahren.

Das Inertgas bei der Pulverherstellung kann wahlweise Argon bzw. ein Gemisch aus Argon mit 0,01 bis 100 % Stickstoff sein. Mögliche Einschränkungen des Stickstoffgehaltes können sein:
0,01 bis 80 %
0,01 bis 50 %
0,01 bis 30 %
0,01 bis 20 %
0,01 bis 10 %
0,01 bis 10 %
0,1 bis 5 %
0,5 bis 10 %
1 bis 5 %
2 bis 3 %

Alternativ kann wahlweise das Inertgas Helium sein.

Das Inertgas kann bevorzugt eine Reinheit von mindestens 99,996 Vol.% haben. Insbesondere soll der Stickstoffgehalt von 0,0 bis 10 ppmv, der Sauerstoffgehalt von 0,0 bis 4 ppmv und einen H2O Gehalt von ≤ 5 ppmv haben.

Insbesondere kann das Inertgas bevorzugt eine Reinheit von mindestens 99,999 Vol.% haben. Insbesondere soll der Stickstoffgehalt von 0,0 bis 5 ppmv, der Sauerstoffgehalt von 0,0 bis 2 ppmv und einen H2O Gehalt von ≤ 3 ppmv haben. Der Taupunkt in der Anlage liegt im Bereich von -10 bis -120°C. Er liegt bevorzugt im Bereich von -30 bis -100°C.

Der Druck bei der Pulververdüsung kann bevorzugt 10 bis 80 bar betragen.

Die mittels additiver Fertigung hergestellten Bauteile und Komponenten bzw. Schichten auf Bauteilen und Komponenten werden aus Schichtdicken von 5 bis 500 µm aufgebaut und haben direkt nach der Herstellung ein texturiertes Gefüge mit in Baurichtung gestreckten Körnern einer mittleren Korngröße von 2 µm bis 1000 µm. Der bevorzugte Bereich liegt zwischen 5 µm und 500 µm.

Die mittels additiver Fertigung hergestellten Bauteile und Komponenten bzw. Schichten auf Bauteilen und Komponenten können wahlweise einer Lösungsglühung im Temperaturbereich von 700°C bis 1250°C für 0,1 min bis 70 h, ggf. unter Schutzgas, wie z. B. Argon oder Wasserstoff, gefolgt von einer Abkühlung an Luft, in der bewegten Glühatmosphäre oder im Wasserbad unterzogen werden. Danach kann wahlweise die Oberfläche durch Beizen, Strahlen, Schleifen, Drehen, Schälen, Fräsen gereinigt oder bearbeitet werden. Eine solche Bearbeitung kann wahlweise teilweise oder ganz auch schon vor der Glühung stattfinden.

Die mittels additiver Fertigung hergestellten Bauteile und Komponenten bzw. Schichten auf Bauteilen und Komponenten haben nach einer Glühung eine mittlere Korngröße von 2 µm bis 2000 µm. Der bevorzugte Bereich liegt zwischen 20 µm und 500 µm.

Die mittels additiver Fertigung aus dem erfindungsgemäß erzeugten Pulver hergestellten Bauteile und Komponenten, bzw. Schichten auf Bauteilen und Komponenten, sollen bevorzugt in Bereichen eingesetzt werden, in denen auch der Werkstoff als Knet- oder Gusslegierung mit verwandter Analyse eingesetzt wird. Unter additiver Fertigung werden auch Begriffe wie generative Fertigung, Rapid Technology, Rapid Tooling, Rapid Prototyping oder dergleichen verstanden.

Außerdem kann oben beschriebenes Pulver auch für die Herstellung der Bauteile mittels heißisostatischen Pressens (HIP) oder herkömmlichen Sinter- und Strangpressprozessen verwendet werden. Außerdem ist die Verfahrenskombination aus additiver Fertigung und folgender HIP Behandlung möglich. Dabei sind die unten beschriebenen für die generative Fertigung Nachbearbeitungsschritte für HIP Bauteile möglich anzuwenden.

Im Allgemeinen unterschieden werden hier:
3D-Druck mit Pulvern,
Selektives Lasersintern und
Selektives Laserschmelzen
Laserauftragsschweißen
Selektives Elektronenstrahlschweißen.

Die hier verwendeten Abkürzungen werden wie folgt definiert:
VIM Vacuum Induction Melting
VIGA Vacuuminertgasverdüsungsanlage
VAR Vacuum Arc Remelting
VOD Vaccum Oxygen Decaburization
VLF Vaccum Ladle Furnace
EIGA Electrode Induction Melting Gas Atomization

Vorteilhafte Weiterbildungen des erfindungsgemäßen Verfahrens sind den Unteransprüchen zu entnehmen.

Der Spreizungsbereich für die Partikelgröße des Pulvers liegt zwischen 5 bis 250 µm, wobei bevorzugte Bereiche zwischen 5 und 150 µm, bzw. 10 und 150 µm, liegen.

Das Pulver hat Gaseinschlüsse von 0,0 bis 4% Porenfläche (Poren > 1 µm) im Verhältnis zur Gesamtfläche ausgewerteter Objekte, wobei bevorzugte Bereiche liegen bei
0,0 bis 2%
0,0 bis 0,5 %
0,0 bis 0,2 %
0,0 bis 0,1 %
0,0 bis 0,05 %

Das Pulver hat eine Schüttdichte von 2 bis zur Dichte der Legierung von ca. 8 g/cm³, wobei bevorzugte Bereiche bei folgenden Werten liegen können:
4-5 g/cm³
2-8 g/cm³
2-7 g/cm³
3-6 g/cm³

Die Menge der Gaseinschlüsse des Pulvers ermöglicht eine geringe Restporosität der hergestellten Teile.

Das nach diesem Verfahren gefertigten Pulver als auch aus diesem Pulver gefertigten Komponenten (3D-gedruckte Proben) sind frei von Nitriden als auch von Karbiden und / oder Karbonitrieren. Sollten Nitriden als auch von Karbiden doch vorhanden sein, so haben diese eine Partikelgrößen im Durchmesser von < 100nm insbesondere <50nm.

Nach einer Wärmebehandlung von aus diesem Pulver gefertigten Komponenten (3D-gedruckte Proben) zur Homogenisierung, Diffusionsglühung über 900°C speziell über 1000°C idealerweise über 1100°C für mehr als 1 Stunde können in den gefertigten Komponenten (3D-gedruckte Proben) Nitride als auch von Karbide und /oder Karbonitride auftreten. Diese haben eine Partikelgrößen im Durchmesser von < 8µm, beziehungsweise <5µm, idealerweise < 1µm.

Gegenüber dem Stand der Technik wird auf das Zentrifugenverfahren verzichtet, hierdurch wird die Betriebszeit der Anlage optimiert. Die anschließenden Veredelungsprozesse optimieren die Qualität des Pulvers für die Additive Fertigung.

Von Vorteil kann sein, wenn der Block vor der Zerteilung einer Bearbeitung der Oberfläche (z.B. durch Bürsten, Schleifen, Beizen, Trennen, Schälen etc.) unterzogen wird. Hier können Fehler entfernt werden, welche durch das weitere Umschmelzen nicht beseitigt werden können und für spätere Anwendungen von Schaden sein können.

Das erfindungsgemäße Verfahren lässt sich auf jede Ni- oder Ni-Co-Basislegierung anwenden.

Im Folgenden wird eine Legierungszusammensetzung vorgestellt, die mittels der erfindungsgemäßen Verfahrensparameter als Pulver erzeugt werden kann. Diese kohlenstoffhaltige Legierungszusammensetzung kann als Pulver mit einer Partikelgröße vorzugsweise zwischen 15 µm und 53 µm oder zwischen 45 µm bis 150 µm mittels eines Schmelzschweißprozesses wie Laser- oder Elektronenstrahl zu Bauteilen verarbeitet werden. Die Legierungszusammensetzung zeichnet sich durch eine besonders gute Verarbeitbarkeit in Form einer besonders geringen Heißrissneigung aus, wenn das Kohlenstoff zu Bor Verhältnis (C/B-Verhältnis) im Pulver zwischen > 4 und < 25 liegt und die Summe aus B+C > 0,1875% und < 0,525% beträgt.

Die mittels Schweißprozess erzeugten Bauteile aus dieser Legierungszusammensetzung werden vorzugsweise im Bereich Hochtemperaturanwendung (Einsatztemperatur > 550°C) bei gleichzeitiger mechanischer Beanspruchung (Zeitstandbeanspruchung > 10.000h) eingesetzt.

Eine vorteilhafte Zusammensetzung des erfindungsgemäßen Pulvers wird nachstehend wiedergegeben (alle Angaben sind in Gew.-%):

| | |
|---|---|
| C | 0,15 - 0,50% |
| S | max. 0,150 %, insbesondere max. 0,03 % |
| Cr | 22 - 25 % |
| Ni | Rest |
| Mn | max. 1 % |
| Si | max. 1 % |
| Mo | 8 - 10% |
| Ti | 0,25 - 0,5 % |
| Nb | max. 5,5 % |
| Cu | max. 5 %, insbesondere max. 0,5 % |
| Fe | max. 25 % |
| Al | 0,80 - 1,50 % |
| V | max. 0,6 % |
| Zr | max. 0,12 %, insbesondere max. 0,1 % |
| Co | 11 - 13% |
| O | 0,00001-0,1 % |
| B | 0,0060 - 0,125 % |

und herstellungsbedingte Verunreinigungen,
wobei das Kohlenstoff zu Bor Verhältnis (C/B) zwischen 4 und 25 liegt und die Summe aus B+C > 0,1875% und < 0,525% beträgt.

Das optimale Kohlenstoff zu Bor Verhältnis liegt zwischen 4 und 25 und die Summe aus B+C liegt zwischen > 0,1875% und < 0,525%. Dies wird wie folgt begründet: bei Schmelz-, Gieß- und Schweißprozessen entscheidet das Erstarrungsintervall, sprich die Temperaturspanne zwischen der Liquidustemperatur und der Solidustemperatur, maßgeblich über die Entstehung von erstarrungsbedingten Ungänzen wie zum Beispiel Heißrissen oder innerer Lunker. Die Zugabe des Elements Bor verbreitert das Erstarrungsintervall. So konnte festgestellt werden, dass eine Erhöhung des Bor-Gehaltes von 0,005% auf 0,020% das Erstarrungsintervall von 127K auf 141K verbreitert. Bei erhöhter Zugabe des Elementes Kohlenstoff hingegen vergesellschaftet sich dieses mit dem Element Bor und verschmälert das Erstarrungsintervall wirksam. So führt eine Erhöhung des Kohlenstoffgehaltes von 0,055% auf 0,500% bei einem Bor-Gehalt von 0,005% zu einer Verkleinerung des Erstarrungsintervalls von 127K auf 99K. Bei einem Bor Gehalt von 0,020% führt ein Kohlenstoffgehalt von 0,350% zu einem Erstarrungsintervall von 123K, bei einem Kohlenstoffgehalt von 0,500% jedoch lediglich zu einem Erstarrungsintervall von 113K (s. Tabelle 1).

**Tabelle 1**

| Legierung | B | C | incipient | liquids | dT | C/B | C+B |
|---|---|---|---|---|---|---|---|
| FM 617B | 0.0023 | 0.056 | 1255 | 1372 | 117 | 24 | 0,058 |
| FM 617 | 0.0050 | 0.055 | 1245 | 1372 | 127 | 11 | 0,060 |
| Var 1 | 0.0200 | 0.350 | 1236 | 1359 | 123 | 17,5 | 0,37 |
| Var 2 | 0.0200 | 0.500 | 1240 | 1353 | 113 | 25 | 0,52 |
| Var 3 | 0.0250 | 0.500 | 1240 | 1353 | 113 | 20 | 0,525 |
| Var 4^{*)} | 0.0050 | 0.500 | 1255 | 1354 | 99 | 100 | 0,505 |
| Var 5^{*)} | 0.0200 | 0.055 | 1230 | 1371 | 141 | 2,75 | 0,075 |

| | | | | | | | |
|---|---|---|---|---|---|---|---|
| *) Kontroll-Varianten mit B < 0,0060% bzw. C/B < 4 oder > 25 | | | | | | | |

Daraus folgt, dass eine Erhöhung des Bor Gehaltes dann nicht zu einer inakzeptablen Verschlechterung der Verarbeitungseigenschaften über die Schmelzphase wie zum Beispiel dem Schweißen oder dem selektiven Laserschmelzen führt, wenn gleichzeitig der Kohlenstoffgehalt angehoben wird. Das ideale Verhältnis zwischen C und B wurde zu 14,8 bestimmt. Das bedeutet, dass das Erstarrungsintervall auch bei einer Zugabe von Bor konstant bleibt, wenn Kohlenstoff im Verhältnis zu Bor mit dem Faktor 14,8 erhöht wird.

Die Erhöhung von Bor bei gleichzeitig angehobenen Kohlenstoff-Gehalt führt zudem zu einem überwiegenden Auftreten von M23C6 Primärkarbiden bei gleichzeitig reduziertem Auftreten von M6C Karbiden. Der Vorteil von M23C6 Karbiden gegenüber den M6C Karbiden ist, dass diese sich bei einer Glühbehandlung wie zum Beispiel einer Lösungsglühung nicht wieder auflösen und stabil im Gefüge, und somit auch im Korn und nicht vornehmlich an den energetisch-begünstigten Korngrenzen, verteilt bleiben.

Darüber hinaus wurde festgestellt, dass durch einen höheren Kohlenstoffgehalt die Entstehung der Sigma-Phase reduziert wird bzw. sogar vollständig unterdrückt werden kann.

Optional kann der Sauerstoffgehalt der erzeugten Legierung bei 0,00001 - 0,1 %, bei 0,0001 - 0,1 %, bei 0,001 - 0,1 %, bei 0,001 - 0,002 % oder bei 0,0015 - 0,002 % liegen.

Der Sauerstoffgehalt kann alternativ auch wie folgt eingestellt werden:
- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010-0,1
- 0,00001 - 0,10
- 0,00001 - 0,08
- 0,00001 - 0,05
- 0,00001 - 0,03
- 0,00001 - 0,02

Folgende Elemente können bei Bedarf- abhängig vom Anwendungsfall - innerhalb nachstehender Spreizungsbereiche eingestellt werden:

| | |
|---|---|
| Co | > 11 - < 15% |
| Mn | > 0,001 - < 0,3% |
| Mo | > 8,4 - < 10% |
| Ti | > 0,25 - < 0,35% |

Ein vorteilhaftes Verhältnis:
C/B liegt zwischen > 12 und < 18.

Es ist des Weiteren vorteilhaft, wenn die Summe C + B zwischen 0,156 und 0,625 %, insbesondere im Bereich 0,16 und 0,6 %, speziell im Bereich 0,1875 und 0,530 % liegt.

Im Folgenden werden bevorzugte Anwendungsgebiete des erfindungsgemäßen Pulvers angegeben:
- additive Fertigung von Komponenten oder Bauteilen
- additive Fertigung von Schichten auf Komponenten oder Bauteilen
- Fertigung von Komponenten für Turbinen
- Fertigung von Komponenten für die Öl- und Gasindustrie
- Fertigung von Ventilatoren und Flanschen.

Erzielt werden Pulver mit einer Partikelgröße von 5µm bis 250 µm.

Eine zu kleine Partikelgröße unterhalb von 5 µm verschlechtert das Fließverhalten und ist deshalb zu vermeiden, eine zu große Partikelgröße oberhalb von 250 µm verschlechtert das Verhalten bei der additiven Fertigung.

Eine zu geringe Schüttdichte von 2 g/cm² verschlechtert das Verhalten bei der additiven Fertigung. Die größtmögliche Schüttdichte von ca. 8 g/cm³ ist durch die Dichte der Legierung gegeben.

Der Sauerstoffgehalt muss kleiner gleich 0,100 % sein, um die Herstellbarkeit und Verwendbarkeit der Legierung zu gewährleisten. Ein zu niedriger Sauerstoff-Gehalt erhöht die Kosten. Der Sauerstoff-Gehalt ist deshalb ≥ 0,0001 %.

Die nach diesem Verfahren gefertigten Pulver können in der additiven Fertigung zum Bau von Komponenten verwendet werden, welche die Eigenschaften der zugrundeliegenden Legierungen aufweisen.

Das erfindungsgemäße Verfahren wird beispielhaft wie folgt erläutert:
In Tabelle 2 sind beispielhaft chemische Zusammensetzungen (Var 1 bis Var 3) der mit dem erfindungsgemäßen Verfahren möglichen Pulvervarianten angegeben:

**Tabelle 2**

| | Var 1 | Var 2 | Var 3 | Charge #185855 |
|---|---|---|---|---|
| Masse% | | | | |
| C | 0,350 | 0,500 | 0,500 | 0,055 |
| S | 0,002 | 0,002 | 0,002 | 0,002 |
| N | <0,01 | <0,01 | <0,01 | <0,01 |
| Cr | 21,5 | 21,5 | 21,5 | 21,80 |
| Ni | Bal | Bal | Bal | 55,82 |
| Mn | 0-1 | 0-1 | 0-1 | 0,15 |
| Si | 0-1 | 0-1 | 0-1 | 0,12 |
| Mo | 9,0 | 9,0 | 9,0 | 8,86 |
| Ti | 0,30 | 0,30 | 0,30 | 0,33 |
| Nb | 0,3 | 0,3 | 0,3 | 0,01 |
| Cu | 0,01 | 0,01 | 0,01 | 0,01 |
| Fe | 1,5 | 1,5 | 1,5 | 0,32 |
| P | 0,002 | 0,002 | 0,002 | 0,002 |
| Al | 1,35 | 1,35 | 1,35 | 1,32 |
| Mg | 0,002 | 0,002 | 0,002 | 0,002 |
| Ca | 0,001 | 0,001 | 0,001 | 0,001 |
| Co | 11,15 | 11,15 | 11,15 | 11,16 |
| B | 0,020 | 0,020 | 0,025 | 0,002 |
| C/B | 17,5 | 25 | 20 | 27,5 |
| C+B | 0,37 | 0,52 | 0,525 | 0,057 |

In Tabelle 3 sind Zeitstandwerte bis zum Bruch dokumentiert, gemessen an FM 617B - Schweißgut der Charge #185855 mit einem C/B Verhältnis von (0,055/0,002) = 27,5 und der Summe aus C + B von 0,057. Aufgrund des C/B Verhältnisses von > 25 und der geringen Summe von C + B kann zwar eine als ausreichend geltende "Schweißbarkeit" mit den gängigen Lichtbogenverfahren erreicht werden, aber die Zeitstandwerte (Zeit t bis Bruch) sind begrenzt und erreichen nur bei statischen Lasten von Sigma < 83 MPa die geforderten Zeitstandwerte von > 10.000h im Temperaturbereich zwischen 650°C und 800°C.

**Tabelle 3**

| Proben Nr. | Rohling Nr. | T [°C] | Sigma [MPa] | Zeit t bis Bruch [h] |
|---|---|---|---|---|
| 21.1C | C1 | 650 | 458 | 634 |
| 21.1D | D1 | 650 | 398 | 3357 |
| 21.1E | E1 | 650 | 368 | 7712 |
| 21.1F | F1 | 650 | 330 | 17742 |
| 21.1C | C2 | 700 | 362 | 530 |
| 21.1D | D2 | 700 | 302 | 2465 |
| 21.1E | E2 | 700 | 261 | 6460 |
| 21.1F | F2 | 700 | 214 | 28567 |
| 21.1C | C3 | 750 | 261 | 322 |
| 21.1D | D3 | 750 | 192 | 3594 |
| 21.1E | E3 | 750 | 154 | 10921 |
| 21.1C | C4 | 800 | 161 | 409 |
| 21.1D | D4 | 800 | 107 | 4977 |
| 21.1F | F4 | 800 | 83 | 26442 |

## Patentansprüche

1. Nickelbasislegierung für Pulver, wobei die Gehalte, in Gew.-%, wie folgt definiert sind:
| | |
|---|---|
| C | 0,015 - 0,5 % |
| S | max. 0,15 %, insbesondere max. 0,03% |
| Cr | 20 - 25 % |
| Ni | Rest |
| Mn | max. 1 % |
| Si | max. 1 % |
| Mo | bis 10 % |
| Ti | 0,25 - 0,6 % |
| Nb | bis 5,5 % |
| Cu | bis 5 %, insbesondere bis 0,5% |
| Fe | bis 25 % |
| P | max. 0,03%, insbesondere max. 0,02 % |
| AI | 0,8 - 1,5 % |
| V | max. 0,6 % |
| Zr | max. 0,12 %, insbesondere max. 0,1 % |
| Co | bis 15 % |
| B | 0,006 - 0,125 % |
| O | >0,00001 - 0,1% |
optional
| | |
|---|---|
| Se | max. 0,0005 % |
| Bi | max. 0,00005 % |
| Pb | max. 0,002 % |
und herstellungsbedingte Verunreinigungen,
wobei das Kohlenstoff zu Bor Verhältnis C/B zwischen 4 und 25 liegt, wobei die Summe C + B zwischen 0,156 und 0,625 %, insbesondere im Bereich 0,16 und 0,6 %, speziell im Bereich 0,1875 und 0,530 % liegt und wobei die Summe Nb + Ta max. 5,2 % ist.

2. Legierung nach Anspruch 1, wobei Co -Gehalt, in Gew.-%, > 11 % bis < 15 % ist.

3. Legierung nach Anspruch 1 oder 2, wobei Mn -Gehalt, in Gew.-%, > 0,001 - < 0,30 % ist.

4. Legierung einem der Ansprüche 1 bis 3, wobei Mo -Gehalt, in Gew.-%, > 8,4% - < 10 % ist.

5. Legierung einem der Ansprüche 1 bis 4, wobei Ti -Gehalt, in Gew.-%, > 0,25 % - < 0,35 % ist.

6. Legierung nach einem der Ansprüche1 bis 5, wobei C -Gehalt, in Gew.-%, > 0,15 % - 0,5 % ist.

7. Legierung nach einem der Ansprüche 1 bis 6, wobei B -Gehalt, in Gew.-%, > 0,010 % und < 0,05 % ist.

8. Legierung einem der Ansprüche 1 bis 7, wobei C/B > 10 - 25 ist.

9. Legierung nach einem der Ansprüche 1 bis 8, wobei der erreichte Zeitstandwert bei 750°C und einer Last von 261 MPa größer als 322h ist.

10. Verfahren zur Herstellung eines Pulvers aus einer Nickel-Basislegierung nach einem der Ansprüche 1 bis 9, indem
- eine Legierung in einem VIM-Ofen, d.h. Vakuuminduktionsschmelz-Ofen, erschmolzen wird,
- die flüssige Schmelze für 5 min bis 2 Stunden zur Homogenisierung gehalten wird,
- eine geschlossene Verdüsungsanlage mit einem zugeführten Gas auf einen Taupunkt von -10°C bis -120°C eingestellt wird,
- die Schmelze durch eine Düse in einen Gasstrom mit einer Gasflussrate von 2qm³/min bis 150 qm³/min geblasen wird,
- die erstarrten Pulverpartikel in einem gasdicht verschlossenen Behälter gesammelt werden, wobei
- Partikel mit einer Partikelgröße von 5 µm bis 250 µm und sphäricher Form eingesetzt werden,
- Pulver mit Gaseinschlüssen von 0,0 bis 4% Porenfläche, für Poren > 1 µm, im Verhältnis zur Gesamtfläche ausgewerteter Objekte versehen wird,
- Pulver mit einer Schüttdichte von 2 bis zur Dichte der Legierung von ca. 8 g/cm³ eingesetzt wird,
- das Pulver unter der Schutzgasatmosphäre mit Argon luftdicht verpackt wird.

11. Verfahren nach Anspruch 10, wobei die Legierung zunächst als Vorlegierungsblock mit definierter chemischer Analyse durch Erschmelzen im VIM-Ofen erzeugt wird,
- der Vorlegierungs-Block durch Sägen in kleine Stücke getrennt wird.
- die Stücke der Vorlegierung in einem VIM-Ofen erschmolzen werden.

12. Verfahren nach Anspruch 10 oder 11, **dadurch gekennzeichnet, dass** als zugeführtes Gas ein Inertgas eingesetzt wird.

13. Verfahren nach einem der Ansprüche 10 oder 11, **dadurch gekennzeichnet, dass** als zugeführtes Gas Argon eingesetzt wird.

14. Verfahren nach einem der Ansprüche 10 bis 13, **dadurch gekennzeichnet, dass** der Gasstrom in den verdüst wird aus Argon besteht.

15. Verfahren nach einem der Ansprüche 10 bis 14, **dadurch gekennzeichnet, dass** der Gasstrom in den verdüst wird aus Stickstoff besteht.

16. Verfahren nach einem der Ansprüche 10 bis 15, **dadurch gekennzeichnet, dass** der Gasstrom in den verdüst wird aus einem Gemisch aus Stickstoff und Argon besteht.

17. Verfahren nach einem der Ansprüche 10 bis 16, **dadurch gekennzeichnet, dass** die Verdüsung der Schmelze mit 0,5 bis 80 kg/min erfolgt.

18. Verwendung eines Pulvers das nach einem Verfahren gemäß einem der Ansprüche 10 bis 17 hergestellt wird für die additive Fertigung von Komponenten oder Bauteilen.

19. Verwendung eines Pulvers, das nach einem Verfahren gemäß einem der Ansprüche 10 bis 17 hergestellt wird, für die additive Fertigung von Schichten auf Komponenten oder Bauteilen.

20. Verwendung eines Pulvers, das nach einem Verfahren gemäß einem der Ansprüche 10 bis 17 hergestellt wird, für die Fertigung von Komponenten von Turbinen.

21. Verwendung eines Pulvers, das nach einem Verfahren gemäß einem der Ansprüche 10 bis 17 hergestellt wird, für die Fertigung von Komponenten für die Öl- und Gasindustrie.

22. Verwendung eines Pulvers, das nach einem Verfahren gemäß einem der Ansprüche 10 bis 17 hergestellt wird, für die Fertigung von Ventilen oder Flanschen.

## Claims

1. Nickel-based alloy for powder, wherein the contents (in % by weight) are defined as follows:
| | |
|---|---|
| C | 0.015 - 0.5% |
| S | max. 0.15%, in particular max. 0.03% |
| Cr | 20 - 25% |
| Ni | remainder |
| Mn | max. 1% |
| Si | max. 1% |
| Mo | up to 10% |
| Ti | 0.25 - 0.6% |
| Nb | up to 5.5% |
| Cu | up to 5%, particularly up to 0.5% |
| Fe | up to 25% |
| P | max. 0.03%, particularly max. 0.02% |
| Al | 0.8 - 1.5% |
| V | max. 0.6% |
| Zr | max. 0.12%, particularly max. 0.1% |
| Co | up to 15% |
| B | 0.006 - 0.125% |
| O | > 0.00001 - 0.1% |
optionally
| | |
|---|---|
| Se | max. 0.0005% |
| Bi | max. 0.00005% |
| Pb | max. 0.002% |
and production-related impurities,
wherein the carbon to boron ratio (C/B) is between 4 and 25, wherein the total C + B is between 0.156 and 0.625%, particularly in the range from 0.16 to 0.6%, most particularly in the range from 0.1875 to 0.530%, and wherein the total for Nb + Ta is max. 5.2%.

2. Alloy according to Claim 1, wherein Co content in % by weight is > 11% to < 15%.

3. Alloy according to Claim 1 or 2, wherein Mn content in % by weight is > 0.001 to < 0.30%.

4. Alloy according to any one of Claims 1 to 3, wherein Mo content in % by weight is > 8.4% - < 10%.

5. Alloy according to any one of Claims 1 to 4, wherein Ti content in % by weight is > 0.25% - < 0.35%.

6. Alloy according to any one of Claims 1 to 5, wherein C content in % by weight is > 0.15% - 0.5%.

7. Alloy according to any one of Claims 1 to 6, wherein B content in % by weight is > 0.010% and < 0.05%.

8. Alloy according to any one of Claims 1 to 7, wherein C/B is > 10 - 25.

9. Alloy according to any one of Claims 1 to 8, wherein the creep strength achieved at 750°C and a load of 261 MPa is greater than 322 h.

10. Method for producing a powder from a nickel-based alloy according to any one of Claims 1 to 9 by
- melting an alloy in a VIM furnace, i.e. vacuum induction melting furnace,
- retaining the liquid melt for 5 min to 2 hours for homogenisation,
- setting a closed atomisation plant with a supplied gas to a dew point from -10°C to -120°C,
- blowing the melt through a nozzle into a gas stream with a gas flow rate from 2 m³/min to 150 m³/min,
- collecting the solidified powder particles in a gas-tight sealed container, wherein
- particles having a particle size from 5 µm to 250 um and spherical shape are used,
- powder is provided with gas inclusions from 0.0 to 4% porous area, for pores > 1 µm, relative to the total area of evaluated objects,
- powder with a bulk density from 2 to the density of the alloy of approx. 8g/cm³ is used,
- powder is packed airtight under the protective gas atmosphere with argon.

11. Method according to Claim 10, wherein the alloy is first produced as a master alloy block with defined chemical analysis by melting in the VIM furnace,
- the master alloy block is separated into small pieces by sawing,
- the pieces of the master alloy are melted in a VIM furnace.

12. Method according to Claim 10 or 11, **characterized in that** an inert gas is used as the supplied gas.

13. Method according to any of claims 10 or 11, **characterized in that** argon is used as the supplied gas.

14. Method according to any one of Claims 10 to 13, **characterized in that** the gas stream into which atomisation takes place consists of argon.

15. Method according to any one of Claims 10 to 14, **characterized in that** the gas stream into which atomisation takes place consists of nitrogen.

16. Method according to any one of Claims 10 to 15, **characterized in that** the gas stream into which t atomisation takes place consists of a mixture of nitrogen and argon.

17. Method according to any one of Claims 10 to 16, **characterized in that** the atomisation of the melt takes place at a rate of 0.5 to 80 kg/min.

18. Use of a powder produced by a method according to any one of Claims 10 to 17 for the additive manufacturing of components or parts.

19. Use of a powder produced by a method according to any one of Claims 10 to 17 for the additive manufacturing of layers on components or parts.

20. Use of a powder produced by a method according to any one of Claims 10 to 17 for the production of turbine components.

21. Use of a powder produced by a method according to any one of claims 10 to 17 for the production of components for the oil and gas industry.

22. Use of a powder produced by a method according to any one of Claims 10 to 17 for the production of valves or flanges.

## Revendications

1. Alliage à base de nickel pour poudre, sachant que les teneurs, en %/poids, sont définies comme suit :
| | |
|---|---|
| C | 0,015 - 0,5 % |
| S | max. 0,15 %, en particulier max. 0,03 % |
| Cr | 20 - 25 % |
| Ni | rest. |
| Mn | max. 1 % |
| Si | max. 1 % |
| Mo | jusqu'à 10 % |
| Ti | 0,25 - 0,6 % |
| Nb | jusqu'à 5 % |
| Cu | jusqu'à 5 %, en particulier jusqu'à 0,5 % |
| Fe | jusqu'à 25 % |
| P | max. 0,03 %, en particulier jusqu'à 0,02% |
| Al | 0,8 - 1,5 % |
| V | max. 0,6 % |
| Zr | max. 0,12 %, en particulier max. 0,1 % |
| Co | jusqu'à 15 % |
| B | 0,006 - 0,125 % |
| O | > 0,00001 - 0,1 % |
en option
| | |
|---|---|
| Se | max. 0,0005 % |
| Bi | max. 0,00005 % |
| Pb | max. 0,002 % |
et impuretés issues de la fabrication,
sachant que le rapport carbone/bore (C/B) se situe entre 4 et 25, sachant que le total C + B se situe entre 0,156 et 0,625 %, en particulier dans une plage de 0,16 et 0,6 %, spécialement dans une plage de 0,1875 et 0,530 % et sachant que le total Nb + Ta est au maximum de 5,2 %.

2. Alliage selon la revendication 1, sachant que la teneur en Co, en %/poids, est > 11 % à < 15 %.

3. Alliage selon la revendication 1 ou 2, sachant que la teneur en Mn, en %/poids, est > 0,001 - < 0,30 %.

4. Alliage selon l'une quelconque des revendications 1 à 3, sachant que la teneur en Mo, en %/poids, est > 8,4 % - < 10 %.

5. Alliage selon l'une quelconque des revendications 1 à 4, sachant que la teneur en Ti, en %/poids, est > 0,25 % - < 0,35 %.

6. Alliage selon l'une quelconque des revendications 1 à 5, sachant que la teneur en C, en %/poids, est > 0,15 % - 0,5 %.

7. Alliage selon l'une quelconque des revendications 1 à 6, sachant que la teneur en B, en %/poids, est > 0,010 % et < 0,05 %.

8. Alliage selon l'une quelconque des revendications 1 à 7, sachant que C/B est > 10 - 25.

9. Alliage selon l'une quelconque des revendications 1 à 8, sachant que la valeur de fluage à 750°C et sous une charge de 261 MPa est supérieure à 322h.

10. Procédé de fabrication d'une poudre en alliage à base de nickel selon l'une quelconque des revendications 1 à 9, dans lequel
- un alliage est fondu dans un four VIM, c. à d. un four de fusion par induction sous vide,
- la matière en fusion liquide est maintenue pendant 5 min. à 2 heures pour homogénéisation,
- une installation d'atomisation fermée avec un gaz apporté est réglée à un point de rosée de - 10° C à - 120° C,
- la matière en fusion est soufflée à travers une buse dans un flux de gaz à un débit de flux gazeux de 2 m³/min à 150 m³/min,
- les particules de poudre solidifiées sont collectées dans un conteneur fermé étanche au gaz, sachant que
- des particules avec une taille particulaire de 5 um à 250 µm et une forme sphérique sont introduites,
- la poudre est dotée d'inclusions gazeuses de 0,0 à 4 % de la surface poreuse, pour des pores > 1 um, par rapport à la surface totale des objets évalués,
- la poudre est introduite avec une densité en vrac de 2 jusqu'à la densité de l'alliage d'env. 8 g/cm³,
- la poudre est emballée de façon étanche à l'air sous une atmosphère de gaz protecteur avec de l'argon.

11. Procédé selon la revendication 10, sachant que l'alliage est produit d'abord sous la forme d'un bloc de préalliage avec une analyse chimique définie par fusion dans un four de fusion par induction sous vide (VIM),
- le bloc de préalliage est séparé en petits morceaux par sciage,
- les morceaux du préalliage sont fondus dans un four par induction sous vide (VIM).

12. Procédé selon la revendication 12 ou 11, ***caractérisé en ce qu'***un gaz inerte est introduit en tant que gaz apporté.

13. Procédé selon l'une quelconque des revendications 10 ou 11, ***caractérisé en ce que*** de l'argon est introduit en tant que gaz apporté.

14. Procédé selon l'une quelconque des revendications 10 à 13, ***caractérisé en ce* que** le flux gazeux, dans lequel on atomise, est composé d'argon.

15. Procédé selon l'une quelconque des revendications 10 à 14, ***caractérisé en ce que*** le flux gazeux, dans lequel on atomise, est composé d'azote.

16. Procédé selon l'une quelconque des revendications 10 à 15, ***caractérisé en ce que*** le flux gazeux, dans lequel on atomise, est composé d'un mélange d'azote et d'argon.

17. Procédé selon l'une quelconque des revendications 10 à 16, ***caractérisé en ce que*** l'atomisation de la matière en fusion a lieu avec 0,5 à 80 kg/min.

18. Utilisation d'une poudre, qui est fabriquée selon un procédé selon l'une quelconque des revendications 10 à 17 pour la fabrication additive de composants ou d'éléments de construction.

19. Utilisation d'une poudre, qui est fabriquée selon le procédé selon l'une quelconque des revendications 10 à 17, pour la fabrication additive de couches sur des composants ou des éléments de construction.

20. Utilisation d'une poudre, qui est fabriquée selon un procédé selon l'une quelconque des revendications 10 à 17, pour la fabrication de composants de turbines.

21. Utilisation d'une poudre, qui est fabriquée selon un procédé selon l'une quelconque des revendications 10 à 17, pour la fabrication de composants pour l'industrie du pétrole et du gaz.

22. Utilisation d'une poudre, qui est fabriquée selon un procédé selon l'une quelconque des revendications 10 à 17, pour la fabrication de soupapes ou de brides.
